# EUROPEAN PATENT APPLICATION

(11) **EP 4 831 308 A1**
(43) Date of publication of application: **28.10.2026**
(21) Application number: 24908302.3
(22) Date of filing: 17.12.2024
(51) Int. Cl.: C22B 3/12, C22B 3/22, C22B 26/12

(54) **METHOD FOR RECOVERING LITHIUM**

(30) Priority: 18.12.2023 KR 20230185249
(71) Applicant: POSCO Holdings Inc., Pohang-si, Gyeongsangbuk-do 37859 (KR)
(72) Inventor: KUK, Seung Taek, Pohang-si, Gyeongsangbuk-do 37859 (KR); PARK, Jaesin, Pohang-si, Gyeongsangbuk-do 37859 (KR); KIM, Ju Young, Pohang-si, Gyeongsangbuk-do 37859 (KR); PARK, Woonkyoung, Pohang-si, Gyeongsangbuk-do 37859 (KR); YANG, Heok, Pohang-si, Gyeongsangbuk-do 37859 (KR); JUNG, Myungwon, Pohang-si, Gyeongsangbuk-do 37859 (KR)
(74) Representative: Pfenning, Meinig & Partner mbB
(86) International application number: PCT/KR2024/097054
(87) International publication number: WO 2025/136020

(57) **Abstract**

A method for recovering lithium according to an embodiment of the present invention includes: preparing a lithium-containing solution; a precipitation step of introducing an impurity removing agent into the lithium-containing solution to form a precipitate; and a solid-liquid separation step of mixing a solid-liquid separation aid with the slurry and separating the mixture to obtain a filtrate, wherein the solid-liquid separation aid may include ore residue.

## Description

### [TECHNICAL FIELD]

The present invention relates to a method for recovering lithium.

### [BACKGROUND ART]

Lithium compounds are used for various purposes across various industries, such as secondary batteries, ceramics, glass, alloys, pharmaceuticals, and the like, and with recent commercialization of electric vehicles and increasing need for power storage, demand for lithium materials is also expected to grow significantly in the future.

Raw materials for manufacturing lithium materials include minerals, brine, sea water, and the like. Among these, minerals such as spodumene, petalite, and lepidolite contain a relatively large amount of lithium, about 1% to 1.5%. However, in order to extract lithium from minerals, a very large number of processes, such as flotation, high-temperature calcination, pulverization, acid mixing, extraction, purification, concentration, precipitation, and the like, must be performed, and thus the recovery procedure is complicated, costs are high due to high energy consumption, and there is a serious problem of environmental pollution due to use of acid in the process of extracting lithium.

In addition, it is known that a total of 2.5×10¹¹ tons of lithium is dissolved in seawater, and a technology of extracting lithium by introducing a recovery device including an adsorbent into seawater, selectively adsorbing lithium, and then acid-treating the same has been mainly used. However, since the concentration of lithium contained in seawater is only 0.1 ppm to 0.2 ppm, extracting lithium from seawater is very inefficient, thereby causing a problem of low economic feasibility.

Due to these problems, lithium is currently mainly extracted from brine. Brine is produced from natural salt lakes, and more than 70% of global reserves are distributed in South American regions such as Argentina, Chile, and Bolivia.

Lithium contained in brine is mainly extracted in the form of lithium carbonate. In a commercialized process, in order to extract lithium from lithium-containing brine in the form of lithium carbonate, a well is drilled in a natural salt lake located at an altitude of 3,000 m or higher, brine is pumped and confined in evaporation ponds, and then naturally evaporated over a long period of several months to about one year to concentrate lithium several times to several tens of times. Thereafter, impurities such as Mg, Ca, and B are precipitated and removed, and lithium is recovered by causing lithium carbonate to precipitate in an amount exceeding the solubility thereof.

One of the most significant problems in a process of manufacturing a lithium compound from such brine is that a filtration rate is very slow in a process of removing Mg and Ca, which are impurities contained in concentrated brine. This can be presumed to be attributable to properties of precipitates including Mg(OH)₂ generated in the impurity removal process. Considering the overall process, there is a need to improve the rates of a solid-liquid separation liming process and an Mg/Ca removal process. In general, methods for improving a solid-liquid separation rate include using a flocculant or using a filter aid. However, both conventional flocculants and filter aids are expensive, and cellulose, which is widely used as a filter aid, has a problem of decaying over time.

In the industry of manufacturing lithium compounds, there is a continuous demand for a solution to problems occurring in an impurity removal process of lithium-containing brine, and to this end, it is necessary to develop a method capable of improving overall productivity by improving a separation rate of precipitates formed in a process of removing Mg and Ca, and a technology capable of improving a lithium recovery rate.

### [DETAILED DESCRIPTION OF THE INVENTION]

### [Technical Problem]

An object of the present invention relates to a method for recovering lithium in a lithium-containing solution such as brine.

Another object of the present invention is to provide a method for quickly and efficiently separating a slurry by using residue generated in a lithium ore process in a process of removing impurities from a lithium-containing solution.

### [Technical Solution]

A method for recovering lithium from brine according to an embodiment of the present invention may include: preparing a lithium-containing solution; a precipitation step of introducing an impurity removing agent into the lithium-containing solution to form a precipitate; and a solid-liquid separation step of mixing a solid-liquid separation aid with a slurry obtained in the precipitation step and introducing the mixture into a filter to filter a filtrate, wherein the solid-liquid separation aid may include ore residue.

A method for recovering lithium from brine according to another embodiment of the present invention may include: preparing a lithium-containing solution; a precipitation step of introducing an impurity removing agent into the lithium-containing solution to form a precipitate; and a solid-liquid separation step of introducing a slurry obtained in the precipitation step into a filter to filter a filtrate, wherein, before the slurry is introduced into the filter, distilled water in which a solid-liquid separation aid is dispersed may be introduced into the filter to form a uniform solid-liquid separation aid coating layer on a surface of the filter.

The ore residue is lithium ore residue.

A particle size D(90) of the solid-liquid separation aid is 300 µm or less, and a specific surface area BET of the solid-liquid separation aid is 200 m²/g or more.

In the step of preparing the lithium-containing solution, a concentration of lithium (Li) in the lithium-containing solution is 0.1 g/L to 1.0 g/L.

In the step of preparing the lithium-containing solution, a concentration ratio (Mg/Li) of magnesium (Mg) to lithium (Li) in the lithium-containing solution is 1500 or more.

In the step of preparing the lithium-containing solution, a concentration ratio (Ca/Li) of calcium (Ca) to lithium (Li) in the lithium-containing solution is 100 to 200.

An amount of the solid-liquid separation aid introduced is 40 wt% to 60 wt% based on the total weight of solids separated in the solid-liquid separation step.

In the precipitation step of introducing the impurity removing agent into the lithium-containing solution to form the precipitate, the impurity removing agent includes one or more selected from calcium carbonate (CaCO₃), sodium hydroxide (NaOH), sodium carbonate (Na₂CO₃), calcium hydroxide (Ca(OH)₂), sodium sulfate (Na₂SO₄), and potassium hydroxide (KOH).

The impurity removing agent is introduced in an amount of 0.8 equivalents to 1.3 equivalents (eq/mol) based on the total equivalents of magnesium and calcium contained in the lithium-containing solution.

In the solid-liquid separation step, a filtration rate of the filtrate exceeds 0.1 cm/min.

A thickness of the solid-liquid separation aid coating layer is 0.8 cm to 1.2 cm.

### [Advantageous Effects]

According to an embodiment of the present invention, by using residue generated in a lithium ore process as a solid-liquid separation aid, there are environmentally friendly and economical advantages.

According to an embodiment of the present invention, by adding a solid-liquid separation aid to a slurry formed in a process of removing magnesium and calcium in brine, there are advantages in that productivity of a unit process can be improved by reducing cycle time due to an increased solid-liquid separation rate and, at the same time, extending a replacement cycle of a filter cloth.

### [BRIEF DESCRIPTION OF THE DRAWINGS]

FIG. 1 shows results of a slurry settling test.
FIG. 2 shows results of a solid-liquid separation experiment.

### [BEST MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In the present invention, when a part is referred to as "comprising" a certain component, this means that other components may be further included, rather than excluding other components, unless specifically stated to the contrary.

Hereinafter, embodiments of the present invention will be described in detail so that a person having ordinary skill in the art to which the present invention pertains can easily practice the present invention. However, the present invention may be embodied in various different forms and is not limited to the embodiments described herein.

An embodiment of the present invention relates to a method for recovering lithium.

A method for recovering lithium according to an embodiment of the present invention may include: preparing a lithium-containing solution; a precipitation step of introducing an impurity removing agent into the lithium-containing solution to form a precipitate; and a solid-liquid separation step of mixing a solid-liquid separation aid with a slurry obtained in the precipitation step, and performing solid-liquid separation to obtain a filtrate.

Meanwhile, the solid-liquid separation aid may include lithium ore residue.

First, the step of preparing the lithium-containing solution is performed.

In the present invention, the lithium-containing solution means an aqueous solution containing lithium, and may be a lithium-containing liquid that is extracted from underground through a pump or that flows into a process in a form in which it is naturally eluted, and is not limited to brine from a salt lake region, geothermal brine, oilfield brine (oil well brine), or the like, as an aqueous solution containing lithium that exists in the earth's crust in the form of groundwater or is introduced underground due to industrial needs, for example, introduced underground in an oil extraction process or introduced underground for geothermal power generation.

Specifically, the lithium-containing solution may be brine. More specifically, the lithium-containing solution may be concentrated brine.

A method for obtaining the concentrated brine is not limited in the present invention.

A concentration of a lithium component in the lithium-containing solution may be 0.01 g/L to 0.1 g/L, and specifically 0.04 g/L to 0.06 g/L.

A concentration ratio (Mg/Li) of magnesium (Mg) to lithium (Li) in the lithium-containing solution may be 1500 or more, and a concentration ratio (Ca/Li) of calcium (Ca) to lithium (Li) may be 100 to 200.

A concentration of sulfur (S) in the lithium-containing solution may be 1.0 g/L to 30.0 g/L, and specifically 1.0 g/L to 20.0 g/L, 5.0 g/L to 20.0 g/L, or 5.0 g/L to 15.0 g/L.

A concentration ratio (S/Mg) of a sulfur (S) component to a magnesium (Mg) component in the lithium-containing solution may be 1.10 to 1.30, and specifically 1.15 to 1.25.

Next, the precipitation step of introducing the impurity removing agent into the lithium-containing solution to form the precipitate may be performed.

The step of introducing the impurity removing agent into the lithium-containing solution to form the precipitate is specifically a step of introducing an impurity removing agent for precipitating magnesium and calcium to form a precipitate and a slurry containing magnesium and calcium.

In the present invention, the removing agent for removing magnesium may include one or more selected from calcium carbonate (CaCO₃), sodium hydroxide (NaOH), sodium carbonate (Na₂CO₃), calcium hydroxide (Ca(OH)₂), sodium sulfate (Na₂SO₄), and potassium hydroxide (KOH).

In the present invention, the lithium-containing solution may have a pH of 10 or more, and specifically 10.5 or more. When the pH is 10.5 or more, Mg(OH)₂ or CaCO₃ has low solubility and is easily precipitated, and solid-liquid separation becomes easy, which is preferable.

Specifically, when the pH is 10.5 or more according to introduction of the impurity removing agent, OH⁻ groups react with Mg²⁺ ions included in the solution to generate and precipitate Mg(OH)₂. At this time, as an alkaline material such as calcium hydroxide is supplied, SO₄²⁻ ions included in the lithium-containing solution react with Ca²⁺ to also generate CaSO₄ hydrate. In general, since brine contains more S than Mg, when a removing agent such as calcium hydroxide is introduced in an Mg removal process, a greater amount of CaSO₄ hydrate than Mg(OH)₂ is generated in an Mg cake. A reaction occurring when calcium hydroxide is introduced into concentrated brine can be represented by the reaction scheme shown below.

Ca(OH)₂(s)+ Mg²⁺(aq) + SO₄²⁻(aq) + 2H₂O(l) → Mg(OH)₂(s) + CaSO₄·2H₂O(s)

When an alkaline material such as calcium hydroxide is introduced, precipitation of a CaSO₄ precipitate mainly occurs in an initial low pH region, and as the pH value increases, the precipitation amount of the Mg(OH)₂ precipitate increases. In general, in order to completely remove Mg, which is an impurity contained in concentrated brine, the amount of the alkaline material introduced and the reaction time should be controlled such that the pH value becomes 11 or more.

Meanwhile, CaSO₄ particles generated in a relatively low pH region have a coarse needle-like, plate-like, or angular shape, and as the amount of the alkaline material introduced increases, the pH value of a reaction slurry gradually increases. At a pH value of 9.5 or higher, mutual cross-reactions between CaSO₄-Ca(OH)₂-Mg(OH)₂ phases proceed, and miniaturization of the coarse CaSO₄ particles generated in the low pH region starts, and generation of fine Ca(OH)₂ and Mg(OH)₂ particle phases actively proceeds. When the pH value further increases to an alkaline region, such particle miniaturization tendency may be accelerated, and an increase in such fine precipitates adheres to pores of a filter cloth of a filtration apparatus for separating precipitates to cause clogging, thereby becoming a factor that interferes with subsequent introduction of washing water. As a result, this is a main cause of not only reducing the filtration rate in a solid-liquid separation process after an Mg removal reaction and shortening the service life of the filter cloth, but also reducing productivity of the overall process.

In the present invention, in order to solve the above problem, the filtration rate and efficiency are intended to be improved by adding a solid-liquid separation aid.

In the present invention, in the step of introducing the removing agent into the lithium-containing solution to form the precipitate, the pH of the reaction product is controlled to a target level by controlling an equivalent ratio of the removing agent introduced, thereby carrying out an Mg removal process in which the size of generated particles is grown.

In an embodiment of the present invention, the step of introducing the removing agent into the lithium-containing solution to form the precipitate may specifically introduce 0.5 equivalents to 2.0 equivalents of the removing agent based on equivalents of magnesium and calcium ions in the lithium-containing solution, and specifically 0.8 equivalents to 1.3 equivalents.

In an embodiment of the present invention, the first precipitation step and the second precipitation step are steps performed while stirring using a stirrer, and may be performed by stirring at a stirring speed of 100 rpm to 400 rpm. Stirring at the above stirring speed is preferable because the lithium-containing solution and the impurity removing agent can efficiently contact each other, thereby effectively precipitating magnesium and calcium.

Next, the step of mixing the solid-liquid separation aid with the slurry obtained in the precipitation step and performing solid-liquid separation may be performed.

The solid-liquid separation aid may include lithium ore residue, and a metal component content of the lithium ore residue was obtained through XRF analysis, and a C content was calculated by measuring an amount of carbon dioxide in gas generated by combusting the lithium ore residue. The analysis results are shown in Table 1 below.

**[Table 1]**

| Component | Na₂O | MgO | Al₂O₃ | SiO₂ | CaO | TiO₂ | Fe₂O₃ | MnO | C | 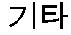 |
|---|---|---|---|---|---|---|---|---|---|---|
| Wt% | 0.13 | 0.16 | 22.30 | 55.20 | 5.19 | 0.18 | 1.49 | 0.23 | 0.70 | 14.42 |

The lithium ore residue may be generated as a by-product through calcination and roasting of lithium-containing ore, such as spodumene, and then precipitation, purification, solid-liquid separation, and the like.

In the present invention, by using lithium ore residue as the solid-liquid separation aid as described above, there are environmentally friendly and economical advantages by utilizing waste resources.

A particle size (D90) of the solid-liquid separation aid may be 300 µm or less, and (D50) may be 60 µm to 80 µm or 65 µm to 75 µm.

In the present invention, the particle size may be measured using PSA (Particle Size Analysis), which is a general method for measuring powder particle size, and a detailed description thereof will be omitted herein.

A specific surface area BET of the solid-liquid separation aid may be 200 m²/g or more, and specifically 200 m²/g to 350 m²/g or 250 m²/g to 300 m²/g.

In the present invention, the "specific surface area" was measured using a Brunauer-Emmett-Teller analysis method according to a nitrogen adsorption method, and a method of measuring the specific surface area of a material by measuring an adsorption amount by partial pressure by adsorbing and desorbing nitrogen gas on a surface of a solid sample using the BET (Brunauer Emmett Teller) equation was adopted.

When the particle size and specific surface area of the solid-liquid separation aid satisfy the above ranges, it is preferable because solid materials in the slurry obtained in the precipitation step of introducing the impurity removing agent into the lithium-containing solution to form the precipitate can be quickly separated from liquid materials.

The solid-liquid separation aid may be introduced in an amount of 20 wt% to 100 wt% based on the total weight of magnesium and calcium solid precipitates per unit volume of the lithium-containing solution.

Meanwhile, an amount of the solid-liquid separation aid introduced may be 40 wt% to 60 wt% based on the total weight of solids separated in the solid-liquid separation step, specifically 45 wt% to 55 wt%, and more specifically 50 wt%.

When the solid-liquid separation aid is introduced within the above range, it is preferable because the separation rate and separation efficiency of magnesium and calcium precipitates and liquid materials in the lithium-containing solution by the impurity removing agent can be improved.

After the solid-liquid separation aid is mixed with the slurry obtained in the precipitation step, the solids may be 5 wt% to 50 wt% based on the total weight.

When the above range is satisfied, it is preferable because the solid-liquid separation rate and the solid-liquid separation efficiency can be improved in the solid-liquid separation step.

Meanwhile, after the solid-liquid separation aid is mixed with the slurry obtained in the precipitation step, a settling rate of solids in the slurry may be 1.5 ml/min or more, specifically 2.0 ml/min or more, and more specifically 2.78 ml/min or more.

The slurry formed in the precipitation step may be separated into a solid material and a liquid material using a pressurized solid-liquid separation apparatus. Here, when the same volume of slurry is subjected to solid-liquid separation, each filtration rate was calculated as a value converted by measuring the volume of filtered liquid material and solid-liquid separation time and then dividing by a filter cloth area.

In the solid-liquid separation step, the filtration rate of the filtrate may be greater than 0.1 cm/min, specifically 0.13 cm/min or more, and more specifically 0.13 cm/min to 0.25 cm/min or 0.15 cm/min to 0.20 cm/min.

In an embodiment of the present invention, after the solid-liquid separation step, the method may further include obtaining a washing liquid obtained by introducing washing water into a separator containing the solid material.

The washing liquid may include lithium included in the solid material, and may be mixed with the filtrate separated in the solid-liquid separation step. By including such a step, it is preferable because the lithium recovery rate in the overall lithium recovery process can be improved.

Another embodiment of the present invention provides a method for recovering lithium, including: preparing a lithium-containing solution; a precipitation step of introducing an impurity removing agent into the lithium-containing solution to form a precipitate; and a step of introducing a slurry obtained in the precipitation step into a filter and performing solid-liquid separation. At this time, before the slurry is introduced, an aqueous solution containing a solid-liquid separation aid may be passed through the filter, so that the solid-liquid separation aid is coated over the entire filter surface of the filter.

A thickness of a solid-liquid separation aid coating layer coated on the filter surface of the filter may be 0.5 cm to 2 cm, specifically 0.8 cm to 1.2 cm, and more specifically 1 cm.

When the solid-liquid separation aid coating layer is formed to the above thickness, it is preferable because the solid-liquid separation rate and separation efficiency for the slurry can be improved.

Since the solid-liquid separation aid has been described above in detail, the description thereof will be omitted here.

### [MODE FOR CARRYING OUT THE INVENTION]

Hereinafter, embodiments of the present invention will be described in more detail through Examples. However, the following Examples are only preferred embodiments of the present invention, and the present invention is not limited by the following Examples.

### (Preparation of Lithium-Containing Aqueous Solution)

A lithium-containing aqueous solution having the composition shown in Table 2 below was prepared.

The unit of each composition concentration is g/L.

**[Table 2]**

| Li | S | Ca | Mg | B | Na | K | pH | Concentratio n Ratio (S/Mg) |
|---|---|---|---|---|---|---|---|---|
| 10 | 2.5 | 1.5 | 1 | 1.5 | 80 | 50 | 6.6 | 2.5 |

### (Preparation of Solid-Liquid Separation Aid)

Residue, which was a by-product discharged from a lithium ore process, was classified by particle size and used in experiments.

The particle size and specific surface area of the residue before particle size separation were analyzed and are shown in Table 3 below.

**[Table 3]**

| Particle Diameter D10(µm) | Particle Diameter D50(µm) | Particle Diameter D910(µm) | Specific Surface Area (m²/g) |
|---|---|---|---|
| 13.1 | 71.1 | 223 | 2.5 |

The residue was classified into particle sizes of ① 100 µm or less (solid-liquid separation aid 1), ② 100 µm to 150 µm (solid-liquid separation aid 2), and ③ 150 µm to 300 µm (solid-liquid separation aid 3).

### (Mg and Ca Precipitation Experiment in Lithium-Containing Aqueous Solution)

Na₂CO₃ was used as a removing agent for removing Mg and Ca in the lithium-containing aqueous solution.

Based on complete removal of Mg to a level of 0.003 g/L or less included in the filtrate after the Mg removal reaction in the lithium-containing aqueous solution, Na₂CO₃ was introduced in an amount of about 1 equivalent based on the total of Mg and Ca components, and the total reaction time was kept the same for both Comparative Examples and Examples at 2 hours such that the pH value became 11 or more.

After Na₂CO₃ was introduced, a reaction was performed while maintaining a temperature of 60°C and stirring at a stirring speed of 300 rpm for 2 hours, and after secondary Ca(OH)₂ was introduced, the reaction was terminated after stirring at a stirring speed of 300 rpm for 1 hour to form a slurry.

### (Slurry Settling Test)

The prepared solid-liquid separation aid was introduced into 1 L of the slurry formed in the precipitation experiment based on 50 wt% of the weight of the finally formed precipitate, and a settling rate of solids was analyzed.

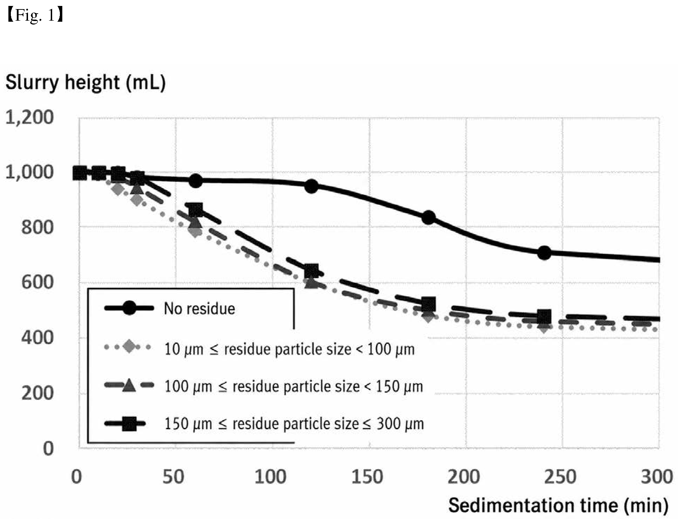

FIG. 1 is a graph showing a change in height of a solid material (or slurry) layer positioned at a lower portion, which is distinguished from an upper transparent water layer, according to settling time for each particle size of the solid-liquid separation aid.

Referring to FIG. 1, the slurry settling rate was found to be somewhat faster at the beginning as the particle size of the solid-liquid separation aid decreased, and almost similar results were shown after about 180 minutes. That is, when the solid-liquid separation aid was mixed, it was confirmed that, up to a particle size of about 300 µm, the solid-liquid separation aid served as a settling aid that helps the slurry settle at a similar rate regardless of the particle size. Meanwhile, when the solid-liquid separation aid was mixed, it was confirmed that the settling rate was remarkably faster than that of the slurry with which the solid-liquid separation aid was not mixed.

Therefore, it can be confirmed that, when the solid-liquid separation aid according to the present invention is mixed, the separation rate between solid materials and water in the slurry can be improved. In addition, when solid-liquid separation is performed using a settling tank, it can be confirmed that a solid-liquid separation layer is easily formed when the solid-liquid separation aid according to the present invention is used.

### (Solid-Liquid Separation Experiment)

The prepared solid-liquid separation aid was introduced into 1 L of the slurry formed in the precipitation experiment based on 50 wt% of the weight of the finally formed precipitate, uniformly stirred, and then a solid-liquid separation experiment was performed using a filter.

After the slurry and the solid-liquid separation aid were mixed, the solid material concentration was measured to be about 1.5 wt% to 10 wt%.

At this time, the filter area of the filter was 100 cm².

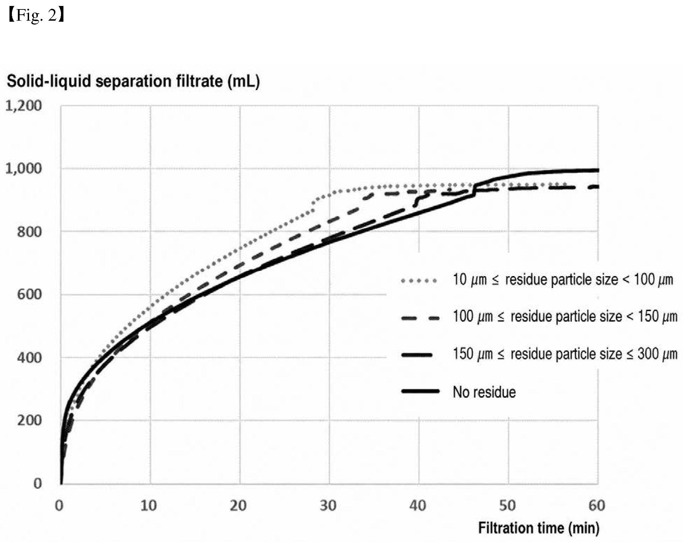

A volume of separated filtrate according to filtration time was measured and is shown in FIG. 2.

Referring to FIG. 2, when the solid-liquid separation aid was not mixed, it took about 50 minutes to complete solid-liquid separation of 1 L of slurry. When solid-liquid separation aid 3 (particle size: 150 µm to 300 µm) was used, it took about 45 minutes; when solid-liquid separation aid 2 (particle size: 100 µm to 150 µm) was used, it took about 37 minutes; and when solid-liquid separation aid 1 (particle size: 100 µm or less) was used, it took about 30 minutes.

When solid-liquid separation aid 1 (particle size: 100 µm or less) was used, it was confirmed that the solid-liquid separation time could be shortened by up to 40% compared with the case where the solid-liquid separation aid was not mixed.

By using the solid-liquid separation aid according to the present invention, cycle time of the solid-liquid separation process in a process of removing Mg and Ca contained in brine can be shortened, and a filter cloth replacement cycle can be extended, thereby providing an advantage of significantly improving productivity.

In particular, by using the solid-liquid separation aid of the present invention, which uses a waste by-product discharged from an ore process, instead of an expensive conventional filter aid, there is an effect of greatly improving economic feasibility of the overall process of producing lithium compound products.

Through the above, preferred embodiments of the present invention have been described. However, the present invention is not limited thereto, and may be variously modified and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A method for recovering lithium, comprising:
preparing a lithium-containing solution;
a precipitation step of introducing an impurity removing agent into the lithium-containing solution to form a precipitate; and
a solid-liquid separation step of mixing a solid-liquid separation aid with a slurry obtained in the precipitation step and introducing the mixture into a filter to filter a filtrate,
wherein the solid-liquid separation aid comprises ore residue.

2. A method for recovering lithium, comprising:
preparing a lithium-containing solution;
a precipitation step of introducing an impurity removing agent into the lithium-containing solution to form a precipitate; and
a solid-liquid separation step of introducing a slurry obtained in the precipitation step into a filter to filter a filtrate,
wherein, before the slurry is introduced into the filter, distilled water in which a solid-liquid separation aid is dispersed is introduced into the filter to form a uniform solid-liquid separation aid coating layer on a surface of the filter.

3. The method for recovering lithium of claim 1 or 2,
wherein the ore residue is lithium ore residue.

4. The method for recovering lithium of claim 1 or 2,
wherein a particle size D(90) of the solid-liquid separation aid is 300 µm or less.

5. The method for recovering lithium of claim 1 or 2,
wherein a specific surface area BET of the solid-liquid separation aid is 200 m²/g or more.

6. The method for recovering lithium of claim 1 or 2,
wherein, in preparing the lithium-containing solution,
a concentration of lithium (Li) in the lithium-containing solution is 0.1 g/L to 1.0 g/L.

7. The method for recovering lithium of claim 1 or 2,
wherein, in preparing the lithium-containing solution,
a concentration ratio (Mg/Li) of magnesium (Mg) to lithium (Li) in the lithium-containing solution is 1500 or more.

8. The method for recovering lithium of claim 1 or 2,
wherein, in preparing the lithium-containing solution,
a concentration ratio (Ca/Li) of calcium (Ca) to lithium (Li) in the lithium-containing solution is 100 to 200.

9. The method for recovering lithium of claim 1,
wherein an amount of the solid-liquid separation aid introduced is 40 wt% to 60 wt% based on a total weight of solids separated in the solid-liquid separation step.

10. The method for recovering lithium of claim 1,
wherein, in the precipitation step of introducing the impurity removing agent into the lithium-containing solution to form the precipitate,
the impurity removing agent comprises one or more selected from calcium carbonate (CaCO₃), sodium hydroxide (NaOH), sodium carbonate (Na₂CO₃), calcium hydroxide (Ca(OH)₂), sodium sulfate (Na₂SO₄), and potassium hydroxide (KOH).

11. The method for recovering lithium of claim 1,
wherein the impurity removing agent is introduced in an amount of 0.8 equivalents to 1.3 equivalents (eq/mol) based on total equivalents of magnesium and calcium contained in the lithium-containing solution.

12. The method for recovering lithium of claim 1 or 2,
wherein, in the solid-liquid separation step,
a filtration rate of the filtrate exceeds 0.1 cm/min.

13. The method for recovering lithium of claim 2,
wherein a thickness of the solid-liquid separation aid coating layer is 0.8 cm to 1.2 cm.
